Europäisches Patentamt

European Patent Office

Office européen des brevets

(11) Numéro de publication: **0 299 833**
**A1**

## DEMANDE DE BREVET EUROPEEN

(21) Numéro de dépôt: **88401684.1**

(22) Date de dépôt: **30.06.88**

(51) Int. Cl.⁴: **B 29 C 65/34**
G 05 D 23/19

(30) Priorité: **15.07.87 FR 8709941**

(43) Date de publication de la demande:
**18.01.89 Bulletin 89/03**

(84) Etats contractants désignés:
**AT BE CH DE ES FR GB GR IT LI LU NL SE**

(71) Demandeur: **GAZ DE FRANCE (SERVICE NATIONAL)**
**23 rue Philibert-Delorme**
**F-75017 Paris (FR)**

(72) Inventeur: **Nussbaum, Max**
**13, allée du Clos Laisnée**
**F-95120 Ermont (FR)**

**Federspiel, Eric**
**4, place Charles de Gaulle**
**F-95210 Saint Gratien (FR)**

(74) Mandataire: **Lerner, François**
**5, rue Jules Lefèbvre**
**F-75009 Paris (FR)**

(54) Procédé et machine pour la soudure entre elles de pièces en matière plastique comportant un bobinage intégré.

(57) L'invention est relative à la soudure automatique de pièces en matière plastique comportant un bobinage intégré.

De façon à réaliser une opération de soudure automatique sans risquer d'endommager les pièces (1, 2, 3) en les soumettant à une température de soudage excessive, on prévoit des moyens (10, 15) de régulation pour faire varier l'énergie électrique délivrée au bobinage, de sorte à maintenir, pendant la phase de soudage, la température du bobinage entre une température minimale en dessous de laquelle la soudure ne peut s'effectuer et une température maximale au-delà de laquelle les pièces se dégraderaient.

L'invention s'applique notamment à la réalisation de réseaux de distribution de gaz sous pression, au moyen de canalisationsen matière plastique.

FIG.1

**Description**

## PROCEDE ET MACHINE POUR LA SOUDURE ENTRE-ELLES DE PIECES EN MATIERE PLASTIQUE COMPORTANT UN BOBINAGE INTEGRE

L'invention concerne un procédé et une machine pour la réalisation automatique de la soudure entre elles de pièces en matière plastique.

On sait que pour de nombreux emplois, et en particulier pour l'établissement de réseaux de distribution de gaz, on utilise aujourd'hui de plus en plus fréquemment des tubes en matière plastique et particulièrement en polyéthylène.

L'assemblage de ces tubes ne peut se faire de façon satisfaisante par collage et l'on est donc amené à les souder et plus précisément à les thermosouder.

Une technique de plus en plus employée consiste à assembler les tubes au moyen de manchons qui comportent un bobinage électrique sur leur face interne.

L'opération de soudage est réalisée en raccordant le bobinage à une source d'alimentation électrique qui, par effet joule, va échauffer le bobinage et provoquer la fusion de la matière plastique du manchon et du tube correspondant, réalisant ainsi le soudage.

D'autres pièces, telles que prises de branchement, bouchons, etc... sont également assemblées sur le réseau suivant le même principe.

Il faut également savoir qu'il existe actuellement plusieurs fabricants de pièces, en particulier en polyéthylène, qui sont assemblées de cette façon par électrosoudage.

Chaque fabricant a établi des règles précises pour souder dans de bonnes conditions son matériel.

Toutefois, ces règles sont aujourd'hui souvent fondées sur une technique de soudage d'une part dans laquelle les seuls relevés de température effectués pour favoriser le bon déroulement de la soudure sont ceux qui sont opérés directement sur les pièces à souder, et, d'autre part, où la source électrique délivre aux bornes du manchon une énergie, c'est-à-dire une tension ou une intensité, qui est sensiblement constante en valeur efficace pendant toute la durée du temps de soudage conseillé.

Le maintien sous tension (ou intensité) constante du bobinage pendant toute la durée du chauffage provoque, comme on le comprend, une élévation continue de sa température, jusqu'à ce que le temps de soudage soit écoulé.

Chaque fabrirant est donc tenu de déterminer avec précision la durée optimale permettant de souder son matériel. Il faut en outre que cette durée de soudage soit strictement respectée en pratique, sur le terrain.

En fait, il est apparu que ce mode de soudage présentait divers inconvénients pouvant affecter la qualité de la soudure.

Lorsque la durée retenue de soudage est trop courte, l'élévation de température n'est pas suffisante et la soudure est de qualité médiocre.

Lorsque cette même durée est trop longue, une dégradation de la matière plastique constitutive des pièces à souder et qui est portée à haute température, est à craindre et des courts-circuits entre les spires du bobinage peuvent survenir.

Par ailleurs, il a été remarqué qu'une mauvaise préparation du tube (grattage irrégulier, trop superficiel ...) ainsi que la présence d'un jeu entre les tubes à souder et le manchon influaient, dans ce cas, de façon importante sur la qualité de la soudure.

Par conséquent, la technique actuelle de soudage qui vient d'être présentée impose la plupart du temps d'effectuer une correction du temps de soudage en fonction de la température initiale des pièces à assembler, ou bien de prévoir une tolérance de fabrication étroite sur la valeur de la résistance électrique du bobinage du manchon.

L'invention a pour objet d'éviter les difficultés qui viennent d'être mentionnées en permettant à l'utilisateur d'effectuer la soudure dans les meilleures conditions, en particulier sans risquer une détérioration des pièces à souder provoquée par une élévation de la température de soudage au-delà de la température de dégradation de la matière plastique constitutive de ces pièces.

A cet effet, le procédé de l'invention se caractérise en ce que, lors de la phase de soudage, on maintient la température au niveau du bobinage dont est pourvu le manchon précité entre une température minimale en-dessous de laquelle la soudure entre-elles des pièces ne peut s'effectuer et une température maximale correspondant à la température de dégradation des pièces, et ce pendant un intervalle de temps $t$ tel que

$$\log t \geqq \frac{A}{T} + B$$

Avec T : température du bobinage ;

t : temps pendant lequel $T_1 < T < T_2$

A et B : constantes correspondant à des paramètres de soudage.

En procédant de cette façon, on élimine pratiquement tout risque de chauffage excessif des pièces à souder, en adaptant la durée de la soudure entre un intervalle de temps minimal (correspondant à une élévation suffisante de température pour permettre la soudure entre-elles des pièces) et un intervalle de temps maximal (correspondant à une fusion excessive des pièces à souder). En pratique, la différence entre ces deux intervalles de temps sera de plusieurs minutes.

On notera également que si l'on applique le procédé de l'invention, le temps de soudage (c'est-à- dire la durée pendant laquelle le bobinage électrique va être chauffé) n'est plus un paramètre essentiel à une bonne qualité de la soudure et peut, de ce fait, être choisi de telle sorte que la qualité de cette soudure ne soit pratiquement influencée ni par la préparation des pièces à assembler (grattage...), ni par le jeu entre ces pièces et le manchon, ni même par la température initiale de ces mêmes pièces.

En outre, le procédé de l'invention permet une tolérance de fabrication plus large sur la valeur de la résistance du bobinage électrique et présente l'avantage d'être aisément applicable aux manchons électrosoudables existants.

En ce qui concerne la machine qui permet la mise en oeuvre du procédé de l'invention, elle comprend notamment des moyens de régulation de l'énergie électrique (tension ou intensité) délivrée au bobinage, de façon à faire évoluer celle-ci pendant la phase de soudage de telle sorte que la température au niveau de ce même bobinage soit, à ce moment, comprise entre les températures minimale et maximale de soudage précitées.

L'invention apparaîtra plus clairement de la description qui va suivre faite en référence aux dessins d'accompagnement illustrant schématiquement et à titre d'exemple trois modes de mise en oeuvre de l'invention.

Dans ces dessins :
- la figure 1 est un schéma synoptique correspondant à un premier mode de réalisation de l'invention,
- la figure 2 est un schéma synoptique correspondant à un second mode de réalisation de l'invention,
- la figure 3 est également un schéma synoptique correspondant à un troisième mode de réalisation de l'invention,
- les figures 4 et 5 sont des courbes illustrant, conformément au procédé de l'art antérieur, l'évolution en fonction du temps $t$ respectivement de la température $T$ du bobinage et de l'énergie électrique (tension $U$ ou intensité $I$) délivrées à ce même bobinage,
- les figures 6 et 7 présentent chacune une courbe d'évolution, conformément au procédé de l'invention, de la température $T$ du bobinage en fonction du temps $t$.
- les figures 8 à 10 présentent chacune une courbe d'évolution, en fonction du temps $t$ et conformément au procédé de l'invention, de l'énergie électrique (tension $U$ ou intensité $I$) délivrée au bobinage.

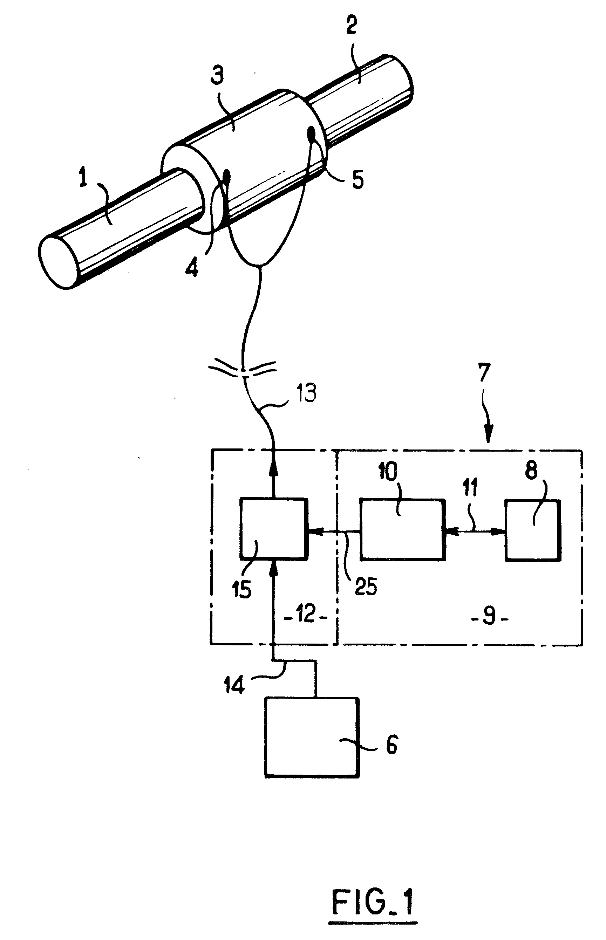

Si l'on se réfère, tout d'abord, à la figure 1, on voit illustrés schématiquement de-x éléments de conduite 1, 2, en matière plastique, par exemple du polyéthylène, devant être réunis au moyen d'un manchon 3, également en polyéthylène, qui sera thermosoudé à cheval sur les extrémités des éléments 1 et 2 aboutés.

Le manchon 3 comprend, de manière habituelle, un bobinage électrique (non représenté) au voisinage de sa paroi intérieure, les extrémités du bobinage étant accessibles par deux bornes 4 et 5 d'alimentation.

De façon connue, la thermosoudure du manchon 3 sur les éléments 1, 2, s'effectue en faisant passer entre les bornes 4, 5 une énergie électrique délivrée par une source 6 et précisément calculée pendant une durée déterminée, et ce pour obtenir la montée en température convenable des pièces de sorte à réaliser une bonne thermosoudure.

Essentiellement, ces données dépendent de la pièce 3 et notamment des paramètres suivants : diamètre du manchon, épaisseur de sa paroi, résistance du bobinage électrique intégré, longueur du manchon, qualité de la matière plastique, temps $t_s$

estimé de soudage, etc...

Ces paramètres sont, tel qu'illustré, stockés dans une mémoire interne 8 de l'étage analogique/logique 9 de la machine 7.

Toutefois, conformément à l'invention et de façon à permettre de maintenir strictement, pendant la phase de soudage, la température au niveau du bobinage à proximité immédiate de l'interface de soudure , entre une température minimale $T_1$ en dessous de laquelle la soudure entre-elles des pièces 1, 2, 3 ne peut s'effectuer et une température maximale $T_2$ correspondant à la température de dégradation ou de fusion excessive de ces mêmes pièces, la mémoire 8 comprend en outre, des informations relatives à la valeur $T$ de la température maximale de bobinage autorisée ($T_1 < T < T_2$). On notera que dans d'autres données, sur lesquelles on reviendra, seront également stockées dans la mémoire 8.

A partir des informations lues, par tout moyen connu, dans la mémoire 8 et transmises par le circuit 11, et en fonction d'un programme informatique de soudure pré établi, interne à la machine, une unité de traitement 10 va déterminer, au niveau de l'étage analogique/logique 9 l'énergie qui doit être délivrée par l'étage de puissance 12 au fil 13 d'alimentation de l'enroulement de chauffage entre les bornes 4, 5 du manchon 3.

Tel qu'illustré, l'énergie électrique admise par l'étage de puissance 12, dans le fil 13 est fournie par la source d'énergie électrique 6 qui peut être constituée par exemple, par le courant électrique du réseau ou par une génératrice de chantier.

Plus précisément, la source 6 est reliée par le circuit 14 à une unité 15 de régulation de l'énergie électrique (tension $U$ ou intensité $I$ efficace) délivrée au bobinage, cette unité 15 étant elle-même reliée, par le circuit repéré 25, à l'unité 10 de traitement précitée.

De cette façon, l'unité de traitement 10 dans laquelle s'effectue la détermination des réglages de l'énergie électrique et qui peut être pilotée par un micro-processeur intégré, va pouvoir adresser les signaux de commande à l'unité 15 de régulation de l'étage 12 de puissance.

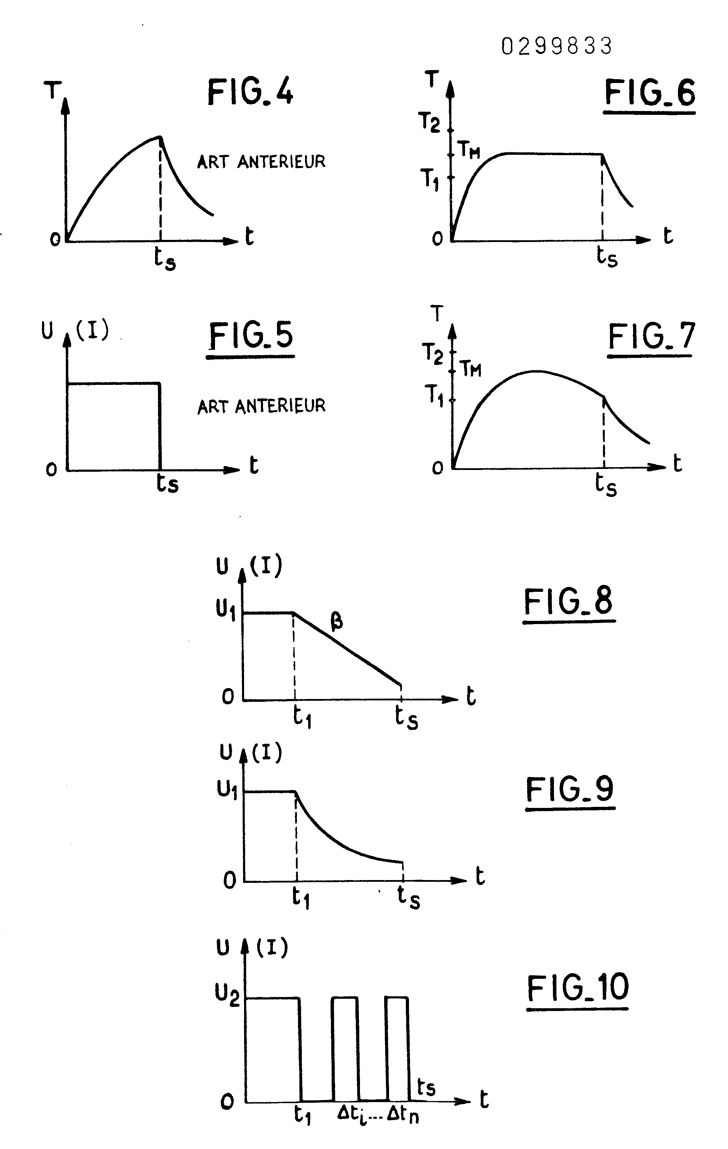

Jusqu'à présent, dans les procédés de soudage connus, l'alimentation en énergie électrique du bobinage était souvent telle qu'on délivrait entre les bornes 4, 5 de ce dernier une tension ou une intensité efficace constante pendant tout le temps de soudage $t_s$, c'est-à-dire pendant toute la durée conseillée par le fabricant pour obtenir une soudure "convenable" des pièces 1, 2, 3. (voir figure 5). De ce fait, l'élévation de la température du bobinage était continue tout au long de l'intervalle de temps $t_s$ (figure 4).

Dans l'invention, l'unité de régulation 15, sous la commande de l'unité de traitement 10, va faire varier et va adapter, tout au long du temps de soudage $t_s$, la valeur de l'énergie électrique que l'on va délivre au bobinage de façon que la température de ce dernier soit maintenue, pendant la phase de soudage, entre les températures $T_1$ et $T_2$ précitées.

En pratique, on va réguler la température au niveau du bobinage à proximité immédiate de l'interface entre les pièces, pendant un intervalle de temps $t$ tel que $\log t \geq \frac{A}{T} + B$

(A et B étant des constantes correspondant à des paramètres de soudure fonction des matières plastiques utilisées). Ainsi pour une température T du matèriau, comprise alors entre $T_1$ et $T_2$ on va sensiblement maintenir cette température pendant un temps $t$, de sorte que les molécules au niveau de l'interface des pièces à assembler se déplacent et s'enchevètrent suffisamment pour conduire à un soudage de qualité.

Le bobinage va donc au cours de la phase de soudage, suivre sensiblement cette loi d'évolution.

On a illustré figures 6 et 7 deux exemples caractéristiques d'évolution de la température du bobinage suivant la loi précitée, au cours de l'intervalle de temps $t_s$.

A la figure 6, on voit que la température croit d'abord progressivement pour se stabiliser ensuite à une valeur déterminée sensiblement constante comprise entre $T_1$ (température limite de soudage) et $T_2$ (température de dégradation de la matiére), et ce jusqu'à ce que l'intervalle de temps $t_s$ se soit écoulé.

Par contre, à la figure 7, la température croit pendant une plus longue durée jusqu'à une valeur limite, également comprise entre $T_1$ et $T_2$, après quoi elle décroit progressivement jusqu'à la fin du temps $t_s$.

En pratique, trois modes de régulation de la tension ou de l'intensité efficace délivrée au bobinage peuvent être retenus.

Tout d'abord, tel qu'illustré figures 8 et 9, l'unité de traitement 10 peut commander à l'unité de régulation 15 de délivrer d'abord une tension efficace U (respectivement une intensité efficace I), de valeur sensiblement constante $U_1$ pendant un temps $t_1$ (inférieur à $t_s$) puis de la faire décroître soit de façon linéaire (figure 8), soit de façon non linéaire (figure 9), jusqu'à ce que le temps de soudage $t_s$ soit écoulé. Bien entendu, l'intervalle de temps $t_1$ pourrait, si cela s'avérait nécessaire, être pratiquement nul. La valeur de l'énergie délivrée (U, I) serait alors adaptée en conséquence.

Tel qu'illustré figure 10 on peut également choisir de maintenir, pendant cette même durée $t_s$, la tension efficace (respectivement l'intensité efficace) délivrée au bobinage à une valeur $U_2$, par exemple constante, et ce pendant des intervalles de temps successifs déterminés entrecoupés de périodes où l'énergie électrique délivrée par la source 6 sera par contre sensiblement nulle. On aura donc alors une évolution "en créneaux" de l'énergie. Eventuellement les niveaux U, I d'énergie atteints pourraient être différents pour chaque créneau (non représenté).

Comme on le comprend, la durée des intervalles de temps successifs de chaque palier sera déterminée et ajustée de façon à conduire à la température limitée voulue du bobinage ; de même pour les valeurs $U_1$, $U_2$ et pour les pentes et équations de courbes de décroissance de l'énergie délivrée.

Suivant le mode d'évolution retenue de la valeur efficace de l'énergie délivrée au bobinage, ces données nécessaires pour mener à bien la soudure seront entrées dans la mémoire 8 de façon à être prises en compte par l'unité de traitement 10. Suivant le cas, il s'agira notamment du temps $t_1$ pendant lequel une énergie sensiblement constante est délivrée, de la pente β de chute d'énergie (cf. figure 8), ou de la courbe de décroissance non linéaire (figure 9), ou encore des intervalles de temps $\Delta t_i$ successifs de chaque palier de régulation (figure 10).

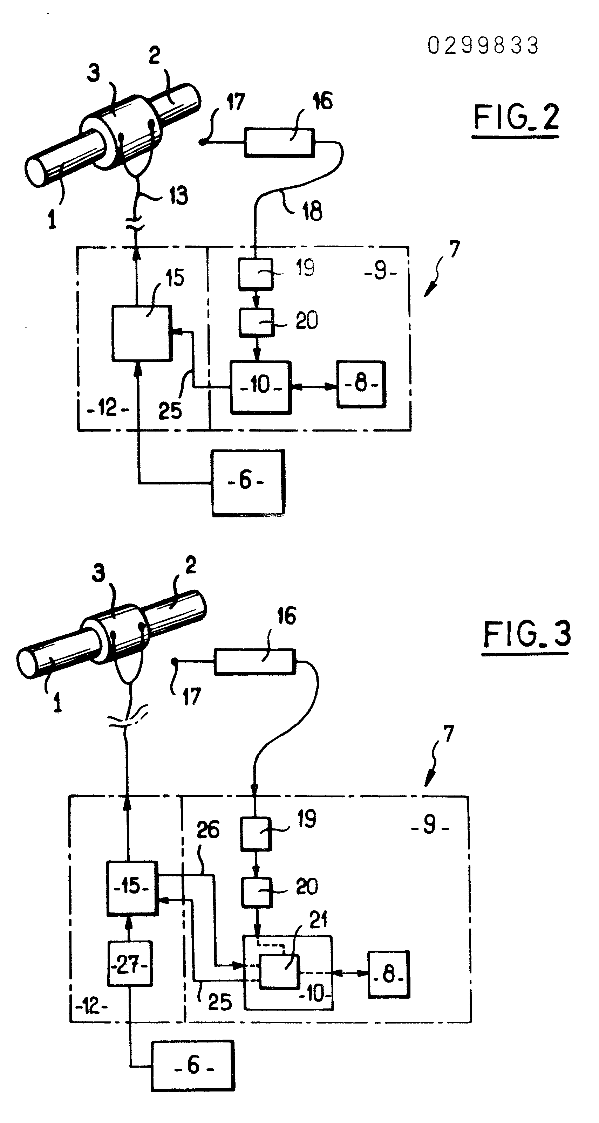

Si l'on se reporte maintenant figure 2, on voit illustré un autre mode de réalisation de la machine de soudure conforme à l'invention.

Ce mode de réalisation diffère du précédent en ce qu'il est prévu, de façon complémentaire, un capteur thermique 16 dont la prise 17 de température est mise en contact du manchon 3 pour déterminer la température effective de la pièce au début de la soudure. La sonde thermique 16 qui est reliée par un câble 18 à la machine 7 permet d'introduire ce paramètre supplémentaire de température dans l'étage analogique/logique 9 de la machine.

Plus précisément, le capteur 16 transmet ses signaux à un amplificateur 19 et les signaux amplifiés arrivent à un étage de mesure 20 tel qu'un convertisseur analogique/numérique qui applique à l'unité de traitement 10 le signal de mesure correspondant. Compte-tenu de ce signal de mesure et des informations contenues dans la mémoire 8 et qui lui sont transmises, l'unité 10 de traitement est capable d'adresser, par le circuit 25 précité, les signaux de commande à l'étage de puissance 12.

Dans ce cas, l'unité mémoire 8 stockera, outre les données essentielles fournies par le fabricant (diamètre du manchon, résistance du bobinage ...), les informations nécessaires ($t_1$, $t_s$, pente β ou $\Delta t_i$, température maximale $T_m$ du bobinage..)pour que l'énergie électrique délivrée au bobinage évolue au cours du temps de soudage $t_s$ de la façon retenue (cf. figures 8, 9, 10), de telle sorte que la température au niveau de ce bobinage soit maintenue dans la gamme considérée,entre les températures limites de régulation $T_1$ (température limite inférieure de soudure) et $T_2$ (température limite, avant dégradation, des pièces à souder).

Si l'on se reporte maintenant figure 3 on voit un troisième mode de réalisation de la machine 7 à souder de l'invention.

Dans cette variante, la machine 7 va, au niveau d'une unité 21 de calcul de l'unité analogique/logique 9, calculer la température T atteinte par le bobinage pendant le temps de soudage $t_s$ pour ajuster l'évolution de la valeur efficace délivrée à ce même bobinage de sorte à conduire à une température limitée au niveau de ce dernier comprise entre $T_1$ et $T_2$.

Une telle procédure de calcul est couramment utilisée sur un tel type de machine à souder. On rappellera néanmoins brièvement les principales opérations.

Le paramètre supplémentaire de température $T_0$ du manchon 3 avant soudage est tout d'abord relevé par le capteur 16, et l'information correspondante est délivrée à l'unité 21 de calcul qui appartient à l'unité 10 de traitement. La résistance électrique $R_0$ du bobinage est alors calculée. On peut à cet effet prévoir d'utiliser les premières valeurs $U_0$ et $I_0$ de la tension et de l'intensité délivrées en tout début de chauffage par la source 6 (on rappellera pour mémoire que la résistance $R_0$ est calculée par la relation

$$R_0 = \frac{U_0}{I_0} \text{ ).}$$

Ces valeurs sont relevées, par exemple par un voltmètre/ampèrmètre 27, et transmises, via l'unité 15, à l'unité de calcul 21, par l'intermédiaire du circuit 26 de liaison avec l'étage analogique/logique 9. On aurait également pu utiliser les valeurs de la tension et de l'intensité provenant d'un test effectué avant le début du soudage sur le manchon 3, lequel aurait été alimenté en tension (ou en intensité) de faible valeur efficace.

La résistance $R_0$ du bobinage étant connue et la mémoire 8 contenant toutes les données nécessaires à la conduite de la soudure et notamment dans ce cas la valeur du coefficient $\alpha$ de variation de la résistance électrique du bobinage en fonction de la température, l'unité 21 de l'étage analogique/logique 9 calcule la température T du bobinage en cours de soudage (on rappelle que ce calcul peut s'effectuer en utilisant la relation $R = R_0 [1 + \alpha (T - T_0)]$, c'est-à-dire, compte tenu de la relation

$$R = \frac{U}{I} \quad , \quad T = \frac{1}{\alpha} \left( \frac{U}{R_0 I} - 1 \right) + T_0$$

La température T du bobinage au cours de la soudure entre-elles des pièces étant connue, la machine va effectivement pouvoir ajuster l'évolution de la valeur efficace de la tension ou de l'intensité délivrée par la source 6 et régulée par l'unité 15 de l'étage 12 de puissance, de façon à conduire à une température limitée du bobinage permettant une soudure de très bonne qualité des pièces entre-elles sans craindre une élévation trop importante de température risquant de les endommager.

Comme on le comprend, l'invention ne se limite pas strictement aux modes de réalisation qui viennent d'être décrits.

On aurait notamment pu prévoir une mémoire 8 externe à la machine 7, cette mémoire se présentant, par exemple, sous la forme d'une carte d'identification (non représentée) associée aux pièces à souder. Des moyens de lecture de cette carte (crayon optique, magnétique...) seraient alors prévus pour relever les paramètres contenus dans la carte et les transmettre à l'unité analogique/logique 9 de la machine.

Egalement bien que dans la description qui précède on n'ait fait référence qu'à une régulation en tension ou en intensité, tout autre type de régulation pourrait être retenu. On aurait notamment pu utiliser un capteur thermique (tel que 16) pour relever au cours du soudage la température à l'interface des pièces à souder.

Pour terminer on notera qu'au brevet français FR 2 572 326 déposé le 18 Octobre 1984 il avait été proposé une machine de soudure ayant, du point de vue des moyens de traitement des informations fournies par la mémoire 8, ou éventuellement par la sonde 16, une structure comparable à celle qui vient d'être décrite.

La machine de l'invention pouvant donc fonctionner avec les moyens décrits à ce brevet, on s'y reportera pour toutes précisions utiles concernant l'organisation interne de la machine.

**Revendications**

1. - Procédé pour réaliser, au moyen d'une machine à commande automatique, la soudure entre-elles de pièces en matière plastique comportant un bobinage intégré permettant le chauffage électrique des pièces à souder, caractérisé en ce que lors de la phase de soudage, on maintient strictement la température au niveau du bobinage entre une température minimale ($T_1$) en dessous de laquelle la soudure entre-elles des pièces ne peut s'effectuer et une température maximale ($T_2$) correspondant à la température de dégradation desdites pièces, et ce pendant un intervalle de temps t tel que :
$$\log t \geq \frac{A}{T} + B$$
avec t : temps pendant lequel la température du bobinage est comprise entre $T_1$ et $T_2$ ;

T : température atteinte par le bobinage dans la gamme considérée ;

A et B : constantes correspondant à des paramètres de soudure.

2 - Machine destinée à réaliser la soudure entre-elles de pièces (1, 2, 3) en matière plastique comportant un bobinage intégré, ladite machine comprenant des moyens (6) d'alimentation en énergie électrique du bobinage permettant le chauffage des pièces à souder et des moyens (9,) de réglage de la durée du chauffage permettant de réaliser la soudure, caractérisée en ce qu'elle comprend des moyens (10, 15,) de régulation pour établir l'énergie électrique délivrée au bobinage à une valeur déterminée non nulle pendant une première partie ($t_1$) de la durée ($t_s$) du chauffage, puis pour faire décroître la valeur de cette énergie, pendant l'intervalle de temps restant, de sorte à maintenir, lors de la phase de soudage, la température au niveau du bobinage entre une température ($T_1$) minimale en dessous de laquelle la soudure entre-elles des pièces (1, 2, 3) ne peut s'effectuer et une température ($T_2$) maximale correspondant à la température de dégradation de ces mêmes pièces.

3. - Machine destinée à réaliser la soudure entre-elles de pièces (1, 2, 3) en matière plastique comportant un bobinage intégré, ladite machine comprenant des moyens (6) d'alimentation en énergie électrique du bobinage permettant le chauffage des pièces à souder et des moyens (9) de réglage de la durée du chauffage permettant de réaliser la soudure, caractérisée en ce qu'elle comprend des moyens (10, 15) de régulation pour maintenir, au cours de la durée du chauffage, l'énergie électrique délivrée au bobinage à une valeur constante pendant des intervalles de temps successifs déterminés entrecoupés de périodes où l'énergie électrique délivrée est sensiblement nulle, de sorte à contenir, lors de la phase de soudage, la température au niveau du bobinage entre une température ($T_1$) minimale en-dessous de laquelle la soudure entre-elles des pièces ne peut s'effectuer et une température ($T_2$) maximale correspondant à la température de dégradation de ces mêmes pièces.

4. - Machine selon la revendication 2 ou la revendication 3, caractérisée en ce qu'elle comprend en combinaison :

- des moyens (8) mémoire dans lesquels sont stockés au moins tous les paramètres nécessaires à l'évolution précitée de l'énergie électrique délivrée au bobinage,

- un circuit (11), en soi connu, de lecture de ces moyens (8) mémoire et de transmission des informations lues vers une unité (10) de traitement déterminant, en fonction de ces informations, les caractéristiques d'un programme de soudure à appliquer, et

- des moyens (15, 25) de commande de la source (6) électrique de soudage, pour appliquer auxdites pièces à souder l'énergie électrique requise par le programme de soudure établi.

5. - Machine selon la revendication 4, caractérisée en ce qu'elle comprend :

- un capteur (16) thermique mesurant un paramètre supplémentaire de température des pièces, et

- des moyens (17, 18, 19, 20) de lecture dudit capteur (16) et de transmission des informations lues vers ladite unité (10) de traitement.

6. - Machine selon la revendication 2 ou la revendication 3, caractérisée en ce qu'elle comprend en combinaison :

- des moyens (8) mémoire dans lesquels sont stockés au moins tous les paramètres nécessaires à l'évolution précitée de l'énergie électrique du bobinage, à l'exception du paramètre de température de ce même bobinage, lesdits moyens mémoire étant associés à un circuit (11) de lecture, en soi connu,

- des moyens (19, 20) de lecture liés à un capteur (16) thermique mesurant la température des pièces,

- des moyens (12, 27) de relevé de l'énergie électrique délivrée au bobinage par les moyens (6) d'alimentation,

- des moyens (21) de calcul de la température du bobinage au cours du chauffage, en fonction de la température mesurée par ledit capteur (16) et des paramètres lus et relevés issus respectivement desdits moyens mémoire (8) et desdits moyens (12, 27) de relevé,

- une unité (10) de traitement déterminant en fonction des paramètres lus dans lesdits moyens mémoire (8) et de la température calculée du bobinage, les caractéristiques d'un programme de soudure à appliquer, et

- des moyens (15, 25) de commande de la source (6) électrique de soudage pour appliquer auxdites pièces à souder l'énergie électrique requise par le programme de soudure établi.

0299833

FIG_1

FIG.2

FIG.3

0299833

FIG.4
ART ANTERIEUR

FIG.6

FIG.5
ART ANTERIEUR

FIG.7

FIG.8

FIG.9

FIG.10

Office européen
des brevets

# RAPPORT DE RECHERCHE EUROPEENNE

Numero de la demande

EP 88 40 1684

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 602 148 (RAMSEY) <br> * Résumé; colonne 5, ligne 17 – ligne 49; figures 1-4 * <br> --- | 1 | B 29 C 65/34 <br> G 05 D 23/19 |
| A | US-A-4 323 526 (HILBUSH) <br> * Colonne 4, lignes 3-30; figures 1-30 * <br> ----- | 1 | |

DOMAINES TECHNIQUES RECHERCHES (Int. Cl.4)

G 05 D
B 29 C

Le présent rapport a été établi pour toutes les revendications

| Lieu de la recherche | Date d'achèvement de la recherche | Examinateur |
|---|---|---|
| LA HAYE | 21-09-1988 | GOETZ P.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)